# EUROPÄISCHE PATENTSCHRIFT

(11) **EP 1 447 729 B1**
(45) Veröffentlichungstag und Bekanntmachung des Hinweises auf die Patenterteilung: **01.07.2009**
(21) Anmeldenummer: 03025520.2
(22) Anmeldetag: 07.11.2003
(51) Int. Cl.: G05B 19/416

(54) **Verfahren zur Spindelorientierung**
Spindle orientation method
Méthode de commande d'orientation d'une broche

(30) Priorität: 11.02.2003 DE 10305396
(43) Veröffentlichungstag der Anmeldung: 18.08.2004
(73) Patentinhaber: Dr. Johannes Heidenhain GmbH, 83292 Traunreut (DE)
(72) Erfinder: Brakelmann, Michael, 30900 Wedemark (DE); Fauser, Matthias, 83355 Grabenstätt (DE)

(56) Entgegenhaltungen:
- EP-A- 0 150 216
- EP-A- 0 580 866
- DE-A1- 19 535 869
- DE-A1- 19 538 491
- JP-A- 63 273 114
- US-A1- 2002 180 394

## Beschreibung

Die Erfindung betrifft ein Verfahren zur Spindelorientierung nach dem Oberbegriff von Anspruch 1. Ein solches Verfahren erlaubt es, eine schnell drehende Spindel etwa einer Werkzeugmaschine in sehr kurzer Zeit in einer definierten Lage zum Stillstand zu bringen, etwa um ein Werkzeug an der Spindel zu wechseln.

In modernen Werkzeugmaschinen kommen Spindeln zum Einsatz, die mit immer höheren Drehzahlen arbeiten. Für das so genannte high-speedcutting werden Fräsköpfe verwendet, die z.B. mit 60000 Umdrehungen pro Minute betrieben werden. So lassen sich die Bearbeitungsgeschwindigkeiten im Vergleich zu langsameren Werkzeugspindeln erhöhen und damit die Bearbeitungszeiten senken. Die Produktivität einer Werkzeugmaschine steigt dadurch deutlich an.

Während eines Bearbeitungsvorganges ist es immer wieder nötig, die Spindel von ihrer hohen Drehzahl abzubremsen und in einer definierten Winkelstellung oder Lage zum Stillstand zu bringen. Dies kann z.B. bei einem Werkzeugwechsel notwendig sein, wenn ein Werkzeug nur in einer bestimmten Orientierung zur Spindel eingesetzt werden kann.

In einer numerisch gesteuerten Werkzeugmaschine wird die Bewegung der Spindelachse von einer Numerischen Steuerung überwacht. Mittels einer kaskadierten Reglerstruktur aus Lageregler, Drehzahlregler und Strom- bzw. Drehmomentregler läßt sich die Spindel zumindest bei niedrigen Drehzahlen sehr genau kontrollieren, indem dem Lageregler die jeweils gewünschte Winkelstellung als Lagesollwert vorgegeben wird. Für sehr hohe Drehzahlen kann aber aus weiter unten näher erläuterten Gründen eine Lageregelung nicht mehr erfolgen. Es ist daher üblich, schnell drehende Spindeln mittels einer Drehzahlregelung auf die gewünschte Drehzahl zu bringen. Hierzu wird der Lageregler deaktiviert und ein Drehzahlsollwert unmittelbar dem Drehzahlregler aufgeschaltet.

Erfordert die Bearbeitung eines Werkstückes häufiges Stillsetzen der Spindel in einer definierten Lage, so wird die hierfür nötige Zeit ein gewichtiger Faktor für den Durchsatz an einer solchen Werkzeugmaschine. Es sind daher bereits Verfahren bekannt, die eine möglichst schnelle Spindelorientierung auch aus hohen Drehzahlen erlauben. Allen diesen Verfahren ist gemein, daß zunächst unter Kontrolle eines Drehzahlreglers die hohe Drehzahl so weit reduziert wird, bis eine Drehzahl erreicht wird, die auch durch einen Lageregler beherrschbar ist.

So beschreibt die EP 0,580,866 B1 ein solches Verfahren zur Spindelorientierung. Nach diesem Verfahren wird nach der Erzeugung eines Spindelorientierungsbefehls zunächst unter Kontrolle des Drehzahlreglers die Drehzahl auf eine Grenzdrehzahl N1 reduziert, indem dem Drehzahlregler eben diese Grenzdrehzahl N1 vorgegeben wird. Erst wenn diese Grenzdrehzahl N1 erreicht ist, werden Parameter berechnet, die es anschließend unter Lageregelung erlauben, auf einer zeitoptimierten Bahn die gewünschte Ruhelage anzufahren.

Dokument DE 195 38 491 A1 beschreibt ein anderes Verfahren zur Spindelorientierung. Nach diesem Verfahren wird zunächst ebenfalls im drehzahlgeregelten Betrieb die Drehzahl auf eine Einschaltdrehzahl n_{einsch} reduziert. Mit Erreichen der Einschaltdrehzahl n_{einsch} wird eine Lageregelung zugeschaltet, wodurch die Spindel exakt in der gewünschten Sollposition zum Stillstand gebracht wird. Darüber hinaus wird eine Grenzdrehzahl nₘₐₓ oberhalb der Einschaltdrehzahl n_{einsch} definiert. Mit Erreichen der Grenzdrehzahl nₘₐₓ beginnt während des drehzahlgeregelten Betriebs ein Synchronisieren der Spindel. Um auftretende Totzeiten während des Positioniervorganges zu minimieren, wird im drehzahlgeregelten Betrieb der Spindel zu jeder Zeit eine Drehzahlvorsteuerung berechnet, deren Ausgangswerte jedoch nicht verarbeitet werden. Danach wird die Drehzahlvorsteuerung gemeinsam mit dem Zuschalten der Lageregelung aktiviert, so dass zur Zeit das Aufschaltvorganges kein Schleppfehler auftritt und keine Einschwingvorgänge erfolgen.

Nachteilig an den Verfahren dieser Art ist es, daß die Spindel nach dem Erreichen der Grenzdrehzahl, bei der die Umschaltung von Drehzahlregelung auf Lageregelung erfolgen soll, erst einige Zeit mit der Grenzdrehzahl bewegt werden muß, um die nötigen Berechnungen für die Umschaltung in die Lageregelung auszuführen. Dies bedeutet einen erheblichen Zeitverlust für die Spindelorientierung, da in dieser Zeit keine weitere Bremsung der Spindel stattfindet. In den bekannten Verfahren ist es außerdem üblich, beim Erreichen der Grenzdrehzahl von maximaler Verzögerung auf konstante Drehzahl umzuschalten. Die zeitliche Ableitung der Beschleunigung, der Ruck, wird dadurch sehr groß, woraus eine hohe Belastung der Mechanik resultiert.

Es ist daher Aufgabe der Erfindung, ein Verfahren anzugeben, mit dem die zur Spindelorientierung nötige Zeit verkürzt werden kann.

Diese Aufgabe wird gelöst durch ein Verfahren nach Anspruch 1. Vorteilhafte Details des Verfahrens ergeben sich aus den von Anspruch 1 abhängigen Ansprüchen.

Es wird nun vorgeschlagen, eine schnell drehende Spindel in einer ersten Phase von einer Startdrehzahl auf eine erste Grenzdrehzahl zu verzögern, und in einer zweiten Phase unter Lageregelung eine definierte Ruheposition anzusteuern. Bereits während dieser ersten Phase wird ein positions- und/oder drehzahlstetiges Umschalten auf den Lageregler vorbereitet. Ist dann die erste Grenzdrehzahl erreicht, wird positions- und/oder drehzahlstetig auf Lageregelung umgeschaltet, wobei eine streng monoton fallende Drehzahl eingehalten wird. Nach der Umschaltung auf den Lageregler wird die Spindel in die definierte Ruhelage positioniert.

Besonders vorteilhaft wird der Bremsvorgang in der ersten Phase ausgeführt, in dem ein maximaler Strom und damit ein maximales Drehmoment zum Bremsen verwendet wird. Dieses Drehmoment kann dabei höher liegen als ein im normalen Betrieb der Spindel erlaubtes Drehmoment, da solche Bremsvorgänge nur gelegentlich und für kurze Zeit auftreten, so daß eine Überlastung des Spindelantriebs nicht zu befürchten ist. Es ist z.B. möglich, zum Bremsen der Spindel eine Solldrehzahl von Null vorzugeben, und den von einem Stromregler erzeugten Strom (der über die Motorkonstante proportional zum bremsenden Drehmoment ist) nur durch eine Überwachungseinheit begrenzen zu lassen, die die Temperatur der Antriebselektronik und/oder des Spindelantriebs überwacht. So kann eine Überlastung des Spindelantriebs verhindert und dennoch mit maximalem Strom gebremst werden. Die erste Phase wird dadurch so kurz wie irgend möglich.

Um nun bei Erreichen der ersten Grenzdrehzahl ein positions- und drehzahlstetiges Umschalten auf den Lageregler überhaupt ermöglichen zu können, muß bereits vor dem Erreichen der ersten Grenzdrehzahl mit den notwendigen Berechnungen für das Umschalten begonnen werden. Damit hierfür während der ersten Phase auch genügend Zeit bleibt, wird zunächst überprüft, ob die Startdrehzahl oberhalb einer zweiten Grenzdrehzahl liegt, die höher als die erste Grenzdrehzahl zu wählen ist. Die Zeitspanne vom Erreichen der zweiten Grenzdrehzahl bis zum Erreichen der ersten Grenzdrehzahl muß groß genug sein, um die erforderlichen Vorbereitungen für das Umschalten auf den Lageregler zu ermöglichen. Das beschriebene Verfahren kommt also nur zur Anwendung, wenn die Startdrehzahl oberhalb der zweiten Grenzdrehzahl liegt.

Bei der Berechnung der Vorgabe für den Lageregler in der zweiten Phase kann schließlich eine Ruckbegrenzung vorgesehen werden. Es läßt sich mit dieser Randbedingung und der Spindellage und Spindeldrehzahl zum Umschaltzeitpunkt sowie der geforderten Ruhelage eine im Sinne der kürzest möglichen Zeit optimale Bahnkurve für die Spindel berechnen.

Weitere Vorteile sowie Einzelheiten der vorliegenden Erfindung ergeben sich aus der nachfolgenden Beschreibung eines bevorzugten Verfahrens zur Spindelorientierung anhand der Figuren. Dabei zeigt
- Figur 1: eine Vorrichtung zum Steuern einer Spindel,
- Figur 2: ein Drehzahl - Zeit - Diagramm der Spindel,
- Figur 3: ein Verfahren zur Spindelorientierung.

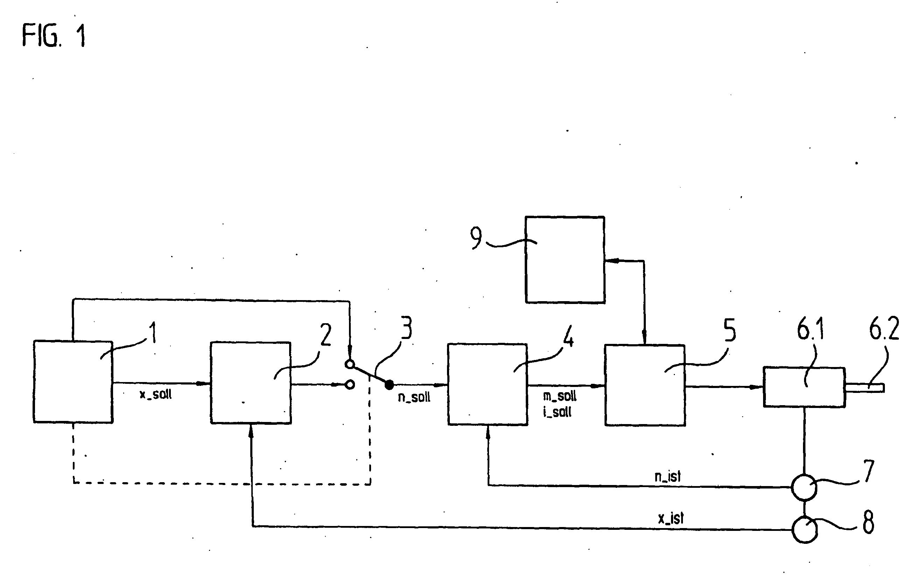

Figur 1 zeigt eine Vorrichtung zum Steuern einer Spindel 6.2. Eine Numerische Steuerung 1 gibt wahlweise Lagesollwerte x_soll an einen Lageregler 2 oder Drehzahlsollwerte n_soll an einen Drehzahlregler 4. Mittels eines Umschalters 3 kann die Numerische Steuerung 1 daher zwischen Lageregelung und Drehzahlregelung umschalten. In beiden Fällen erzeugt der Drehzahlregler 4 ein Solldrehmoment m_soll oder einen Sollstrom i_soll (die beiden Sollwerte sind einander über die Motorkonstante proportional) für den Stromregler in der nachfolgenden Antriebselektronik 5. Der von der Antriebselektronik 5 eingestellte Motorstrom für den Spindelantrieb 6.1 entscheidet letztlich über die Beschleunigung der Spindel 6.2. Ein Drehzahlgeber 7 und ein Lagegeber 8 schließen die Regelschleifen, in dem ein Drehzahlistwert n_ist und ein Lageistwert x_ist an den Drehzahlregler 4 bzw. den Lageregler 2 gegeben werden. Natürlich kann der Drehzahlistwert n_ist auch durch Ableitung aus dem Lageistwert x_ist gewonnen werden.

Um eine Überlastung der Antriebselektronik 5 bzw. des Spindelantriebs 6.1 zu vermeiden, ist üblicherweise in der Numerischen Steuerung 1 ein Parameter gesetzt, der den maximal zulässigen Strom begrenzt. Zusätzlich kann eine Überwachungseinheit 9 vorgesehen werden, die die Temperatur in der Antriebselektronik 5 und/oder im Spindelantrieb 6.2 überwacht und bei zu hohen Temperaturen eine Begrenzung des Motorstromes und damit des Drehmoments bewirkt.

Bei der Spindel 6.2 handelt es sich vorzugsweise um eine direkt angetriebene Spindel 6.2, das beschriebene Verfahren bzw. die beschriebene Vorrichtung lassen sich aber auch für indirekt angetriebene Spindeln 6.2 verwenden.

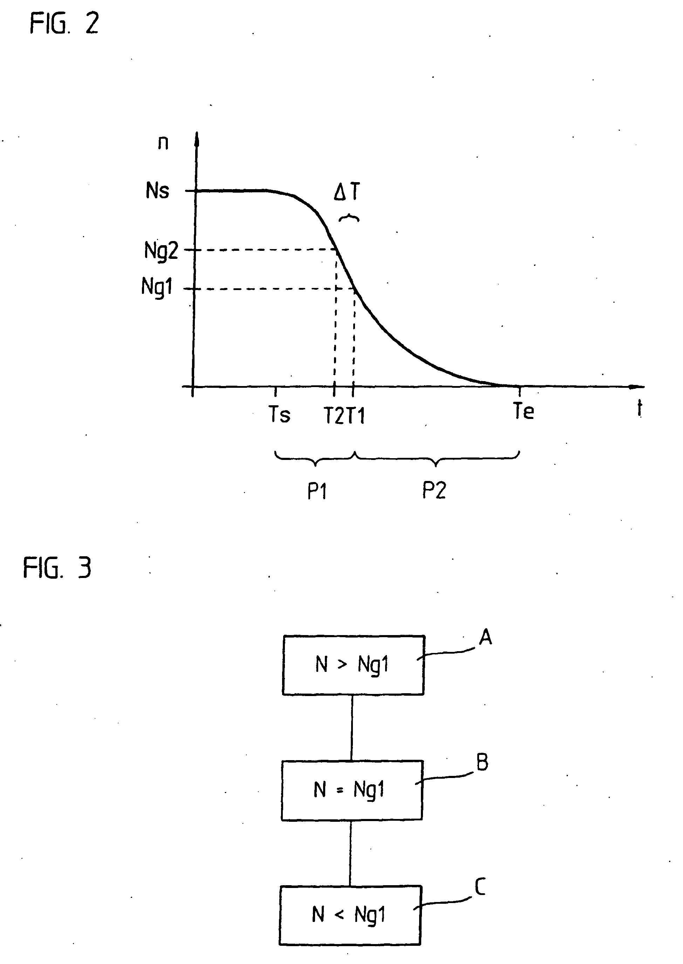

Anhand der Figuren 2 und 3 soll nun das Verfahren beschrieben werden, das eine gegenüber dem Stand der Technik schnellere Spindelorientierung erlaubt.

Ausgangspunkt ist eine Spindel, die sich mit einer hohen Startdrehzahl Ns dreht, die größer ist als eine erste Grenzdrehzahl Ng1. Die Startdrehzahl Ns liegt insbesondere so hoch, daß keine Lageregelung mehr möglich ist, da aufgrund des nicht beliebig kurzen Lageregeltaktes der Numerischen Steuerung 1 pro Spindelumdrehung nicht mehr genügend Lagewerte des Lagegebers 8 ausgewertet werden können. Nach dem Abtasttheorem ist die Minimalforderung für eine Lageregelung die Auswertung von zwei Lagewerten pro Spindelumdrehung. Mit einem für eine Numerische Steuerung 1 typischen Lageregeltakt von 3 ms ergibt sich eine Drehzahl von 10000 U/min, die gerade noch mit Lageregelung beherrschbar ist.

Die erste Grenzdrehzahl Ng1 sollte also niedriger gewählt werden als die gerade noch vom Lageregler 2 beherrschbare Drehzahl, da nach dem beschriebenen Verfahren beim Erreichen dieser ersten Grenzdrehzahl Ng1 von Drehzahlregelung auf Lageregelung umgeschaltet wird.

Im beschriebenen Verfahren wird während einer ersten Phase P1, die zwischen dem Startzeitpunkt Ts und dem Zeitpunkt T1 liegt, zu dem die erste Grenzdrehzahl Ng1 erreicht wird, mit maximalem Drehmoment unter Drehzahlregelung verzögert bzw. gebremst. Es macht keinen Sinn, das beschriebene Verfahren anzuwenden, wenn die Startdrehzahl Ns nur wenig über der ersten Grenzdrehzahl Ng1 liegt, da noch während der ersten Phase P1 in einem Schritt A ein positions- und/oder drehzahlstetiges Umschalten vorbereitet wird. Diese Vorbereitung benötigt eine gewisse Zeit, die nicht zur Verfügung steht, wenn die Startdrehzahl Ns zu knapp über der ersten Grenzdrehzahl Ng1 liegt. In einem Schritt A wird das Verfahren daher vorzugsweise nur dann überhaupt gestartet, wenn die Anfangsdrehzahl Ns auch über einer zweiten Grenzdrehzahl Ng2 liegt. Andernfalls kommen herkömmliche Verfahren zur Spindelorientierung zum Einsatz.

Da gemäß des beschriebenen Verfahrens in einem Schritt B zum Zeitpunkt T1, also dann wenn die Drehzahl der Spindel die erste Grenzdrehzahl Ng1 erreicht, positions- und/oder drehzahlstetig von Drehzahlregelung auf Lageregelung umgeschaltet und damit die zweite Phase P2 eingeleitet wird, müssen bereits vor dem Zeitpunkt T1 gewisse Vorbereitungen in der Numerischen Steuerung 1 getroffen werden. So müssen für eine positionsstetige Umschaltung zu wenigstens zwei Zeitpunkten vor der Umschaltung Lageistwerte x_st ermittelt werden, die eine Extrapolation der Spindellage zum Zeitpunkt T1 ermöglichen. Diese extrapolierte Spindellage wird beim Umschalten auf Lageregelung als Lagesollwert x_soll benötigt.

Genauso ist für ein drehzahlstetiges Umschalten die Ermittlung von wenigstens zwei Drehzahlistwerten n_ist nötig, die eine Extrapolation der Drehzahl zum Zeitpunkt T1 ermöglichen. Diese Drehzahl wird unter Lageregelung als Vorsteuerwert für den Drehzahlregler 4 benötigt. Zusätzlicher Aufwand ist nötig, wenn auch noch eine beschleunigungsstetige Umschaltung erfolgen soll. In der Praxis hat sich jedoch gezeigt, daß ein kleiner Sprung in der Beschleunigung durchaus tolerierbar ist. Der im Stand der Technik nachteilige große Ruck beim Erreichen der Grenzdrehzahl Ng1 wird bereits dadurch vermieden, daß die Verzögerung beim Umschalten aufrecht erhalten wird, wenn auch nicht notwendigerweise völlig ohne sprunghafte Änderung.

Um die genannten Berechnungen auszuführen, ist eine gewisse Zeit nötig, so daß eine Zeitspanne ΔT zwischen dem Erreichen der zweiten Grenzdrehzahl Ng2 (zum Zeitpunkt T2) und dem Erreichen der ersten Grenzdrehzahl Ng1 (zum Zeitpunkt T1) diese Zeit nicht unterschreiten darf. Es sollte bei der Wahl von Ng2 außerdem berücksichtigt werden, daß die erste Phase P1 wenigstens so lang sein sollte, daß die Spindel 6.2 mit maximaler Verzögerung gebremst wird. Zu Beginn der ersten Phase P1 ist aber die Verzögerung noch nicht maximal, wie an der geringen Steigung der Kurve in Figur 2 kurz nach dem Startzeitpunkt Ts abzulesen ist.

Die zweite Grenzdrehzahl Ng2 muß also so gewählt werden, daß die erste Phase P1 genügend Zeit läßt für die nötigen Vorbereitungen zum positions- und/oder drehzahlstetigen Umschalten von Drehzahlregelung auf Lageregelung im Schritt B. Die erste Phase P1 sollte außerdem wenigstens so lange dauern, daß die Spindel 6.1 die maximale Verzögerung erreicht.

Dank der vorab ermittelten Übergabewerte ist es nach dem beschriebenen Verfahren nun möglich, beim Umschalten in Schritt B eine streng monoton fallende Drehzahl n einzuhalten. Es ist nicht wie im Stand der Technik notwendig, die Spindel 6.2 für eine gewisse Zeit vor dem Umschalten auf Lagereglung mit einer konstanten Drehzahl und damit ohne Verzögerung zu betreiben, vielmehr kann kontinuierlich gebremst werden. Das Entfallen einer Phase mit konstanter Drehzahl bewirkt einen entscheidenden Zeitgewinn. Die mit einem Sprung von maximaler Verzögerung auf konstante Drehzahl verbundene Belastung der Mechanik kann außerdem bei monoton fallender Drehzahl weitestgehend, bzw. bei beschleunigungsstetiger Umschaltung sogar völlig vermieden werden.

Ein weiterer Zeitgewinn wird durch die Bremsung mit maximalem Strom und damit maximalem Drehmoment während der ersten Phase P1 erzielt. Dieser maximale Strom wird am einfachsten dadurch erzeugt, daß dem Drehzahlregler 4 durch die Numerische Steuerung 1 eine Soldrehzahl n_soll von Null (oder jedenfalls ein sehr kleiner Wert deutlich unter der ersten Grenzdrehzahl Ng1) vorgegeben wird. Ein vom Drehzahlregler 4 erzeugter Sollstrom i_soll wird dann so groß sein, daß der Spindelantrieb an der Stromgrenze gebremst wird. Natürlich kann der maximale Strom auch als Stromsollwert i_soll direkt von der Numerischen Steuerung vorgegeben werden, wenn die Numerische Steuerung 1 einen entsprechenden Zugriff auf den Stromregler in der Antriebselektronik 5 hat. Es empfiehlt sich allerdings in beiden Fällen der Einsatz einer Überwachungseinheit 9, die die Temperaturen in der Antriebselektronik 5 und/oder im Spindelantrieb 6.1 überwacht und bei drohender Überhitzung den Strom begrenzt.

Bisher wurde vom erfindungsgemäßen Verfahren die erste Phase P1 beschrieben, einschließlich der Maßnahmen, die im Schritt A notwendig sind, um im Schritt B von der Drehzahlregelung auf die Lageregelung, und damit die zweite Phase P2, umzuschalten.

Für die zweite Phase P2 (Schritt C in Figur 3) wird nun durch die Numerische Steuerung 1 ein Bewegungsprofil berechnet, anhand dessen die Lagesollwerte x_soll für den Lageregler 2 ausgegeben werden können. Randbedingung für dieses Bewegungsprofil ist in jedem Fall der Ausgangspunkt der Bewegung, also die Lage der Spindel zu Beginn der zweiten Phase P2 (Zeitpunkt T1) und bei drehzahlstetiger Umschaltung in Schritt B auch die Drehzahl Ng1 zum Zeitpunkt T1, sowie die definierte Ruhelage zum Endzeitpunkt Te und die Enddrehzahl Null. Optional kann ein maximaler Ruck parametriert werden, der gegen Ende der zweiten Phase P2 oder auch während der gesamten zweiten Phase P2 den maximalen Ruck bzw. die maximale Änderung der Beschleunigung begrenzt. Unter Berücksichtung aller Randbedingungen kann ein Bewegungsprofil berechnet werden, das die zweite Phase P2 in kürzest möglicher Zeit beendet.

## Patentansprüche

1. Verfahren zur Spindelorientierung einer numerisch gesteuerten und schnell drehenden Spindel (6.2), mit dem die Spindel (6.2) von einer Startdrehzahl (Ns) in eine vorgegebene Ruhelage gebracht wird, indem die Spindel (6.2) in einer ersten Phase (P1) auf eine erste Grenzdrehzahl (Ng1) gebremst wird, und in einer zweiten Phase (P2) unter Lageregelung die definierte Ruhelage angesteuert wird, wobei eine zweite Grenzdrehzahl (Ng2) oberhalb der ersten Grenzdrehzahl (Ng1) so gewählt wird, daß zwischen dem Erreichen der zweiten Grenzdrehzahl (Ng2) und dem Erreichen der ersten Grenzdrehzahl (Ng1) eine Zeitspanne (ΔT) vergeht, die eine Vorbereitung des Lagereglers (2) zu einer positions- und/oder drehzahlstetigen Umschaltung von einer Drehzahlregelung auf die Lageregelung erlaubt, wobei das Verfahren zur Spindelorientierung nur angewandt wird, wenn die Startdrehzahl (Ns) oberhalb der zweiten Grenzdrehzahl (Ng2) liegt, **gekennzeichnet durch** folgende schritte:
(A) Einleiten einer Bremsung in der ersten Phase (P1), während der das positions- und/oder drehzahlstetige Umschalten auf einen Lageregler (2) vorbereitet wird, indem innerhalb der Zeitspanne wenigstens zwei Lageistwerte (x_ist) und/oder Drehzahlistwerte (n_ist) ermittelt werden, die eine Extrapolation der Lage und/oder Drehzahl der Spindel (6.2) zu einem Zeitpunkt (T1) der Umschaltung zwischen Drehzahlregelung und Lageregelung erlauben,
(B) positions- und/oder drehzahlstetiges Umschalten auf eine Lageregelung zum Umschaltzeitpunkt (T1) beim Übergang von der ersten Phase (P1) in die zweite Phase (P2), wobei beim Umschalten die Drehzahl (n) streng monoton fällt,
(C) Positionieren der Spindel (6.2) mittels des Lagereglers (2) vom Umschaltzeitpunkt (T1) bis zu einem Zeitpunk (T₂) zu dem die vorgegeben Ruhelage erreicht wird, in der zweiten Phase (P2).

2. Verfahren zur Spindelorientierung nach Anspruch 1, **dadurch gekennzeichnet, daß** die Bremsung in Schritt (A) mit einem maximal möglichen Strom vorgenommen wird.

3. Verfahren zur Spindelorientierung nach Anspruch 2, **dadurch gekennzeichnet, daß** der maximal mögliche Strom von einer Überwachungseinheit (9) vorgegeben wird.

4. Verfahren nach Anspruch 3, **dadurch gekennzeichnet, daß** die Überwachungseinheit (9) die Temperatur von Spindelantrieb (6.1) und/oder Antriebselektronik (5) überwacht und bei drohender Überhitzung den maximalen Strom begrenzt.

5. Verfahren nach einem der vorhergehenden Ansprüche, **dadurch gekennzeichnet, daß** die Bremsung in Schritt (A) vorgenommen wird, indem dem Drehzahlregler (4) eine kleine Solldrehzahl (n_soll) deutlich unterhalb der ersten Grenzdrehzahl (Ng1), vorzugsweise eine Solldrehzahl (n_soll) von Null vorgegeben wird, so daß der Spindelantrieb an der Stomgrenze gebremst wird.

6. Verfahren nach einem der vorhergehenden Ansprüche, **dadurch gekennzeichnet, daß** in der zweiten Phase (P2) dem Lageregler (2) Lagesollwerte (x_soll) so vorgegeben werden, daß ein ruckbegrenztes Anfahren der vorgegebenen Ruhelage bewirkt wird.

7. Verfahren nach Anspruch 6, **dadurch gekennzeichnet, daß** ein maximaler Ruck für das ruckbegrenzte Anfahren der vorgegebenen Ruhelage vorgegeben wird.

8. Numerische Steuerung für eine Werkzeugmaschine, eingerichtet für ein Verfahren nach einem der vorhergehenden Ansprüche.

## Claims

1. A method for the spindle orientation of a numerically controlled and rapidly rotating spindle (6.2), by means of which the spindle (6.2) is brought from a start-up speed (Ns) into a provided rest position in that the spindle (6.2), in a first phase (P1), is braked to a first threshold speed (Ng1) and in that the defined rest position is controlled in a second phase (P2) under position control, wherein a second threshold speed (Ng2) above the first threshold speed (Ng1) is chosen in such a manner that, between the reaching of the second threshold speed (Ng2) and the reaching of the first threshold speed (Ng1), a time period (ΔT) passes, which allows for a preparation of the position controller (2) for a position and/or speed continuous switchover from a speed control to a position control, wherein the method for the spindle orientation is used only when the start-up speed (Ns) lies above the second threshold speed (Ng2), **characterized by** the following steps:
(A) initiating a braking in the first phase (P1) during which the position and/or speed continuous switchover to a position controller (2) is prepared in that, within the time period (ΔT), at least two actual position values (x_ist) and/or actual speed values (n_ist) are determined, which allow for an extrapolation of the position and/or of the speed of the spindle (6.2) at a point in time (T1) of the switchover between speed control and position control,
(B) position and/or speed continuous switchover to a position control at the switchover point in time (T1) in response to the transition from the first phase (P1) into the second phase (P2), wherein the speed (n) decreases strictly monotonic during the switchover,
(C) positioning the spindle (6.2) by means of the position controller (2) from the switchover point in time (T1) up to a time (Te), at which the provided rest position is reached, in the second phase (P2).

2. The method for the spindle orientation according to claim 1, **characterized in that** the brake actuation is carried out in step (A) with a maximally possible current.

3. The method for the spindle orientation according to claim 2, **characterized in that** the maximally possible current is provided by a monitoring unit (9).

4. The method according to claim 3, **characterized in that** the monitoring unit (9) monitors the temperature of spindle drive (6.1) and/or electronic drive unit (5) and limits the maximal current in response to an impending overheating.

5. The method according to one of the preceding claims, **characterized in that** the brake actuation is carried out in step (A) **in that** a small nominal speed (n_soll) clearly below the first threshold speed (Ng1), preferably a nominal speed (n_soll) of zero is provided for the speed controller (4) so that the spindle drive is braked at the current limit.

6. The method according to one of the receding claims, **characterized in that**, in the second phase (P2), nominal position values (x_soll) are provided for the position controller (2) in such a manner that a jerk-limiting start-up of the provided rest position is effected.

7. The method according to claim 6, **characterized in that** a maximal jerk for the jerk-limiting start-up of the provided rest position is provided.

8. A numeric control for a machine tool, equipped for a method according to one of the preceding claims.

## Revendications

1. Procédé pour l'orientation de broche d'une broche à rotation rapide (6.2) commandé numériquement, avec lequel la broche (6.2) passe d'une vitesse de rotation initiale (Ns) à une position de repos prédéfinie, la broche (6.2) étant bloquée à une première vitesse de rotation limite (Ng1) dans une première phase (P1) et la position de repos prédéfinie étant commandée par un réglage de position au cours d'une deuxième phase (P2), une deuxième vitesse de rotation limite (Ng2) étant sélectionnée de telle manière au-dessus de la première vitesse de rotation limite (Ng1), un laps de temps (ΔT) s'écoule entre l'atteinte de la deuxième vitesse de rotation limite (Ng2) et l'atteinte de la première vitesse de rotation limite (Ng1), permettant une préparation du dispositif de réglage de position (2) pour une commutation de position continue et/ou de vitesse de rotation continue, d'un réglage de vitesse limite vers un réglage de position, le procédé pour l'orientation de broche étant seulement utilisé lorsque la vitesse de rotation initiale (Ns) est supérieure à la deuxième vitesse de rotation limite (Ng2), **caractérisé par** les étapes suivantes :
(A) Déclenchement d'un blocage dans la première phase (P1), pendant lequel la commutation de position continue et/ou de vitesse de rotation continue est préparée pour un dispositif de réglage de position (2), au moins deux valeurs de position effectives (x_ist) et/ou valeurs de vitesse de rotation effectives (n_ist) sont calculées pendant le laps de temps (ΔT), permettant une extrapolation de la position et/ou de la vitesse de rotation de la broche (6.2) à un instant (T1) de commutation entre le réglage de vitesse de rotation et le réglage de position,
(B) Commutation de position continue et/ou de vitesse de rotation continue sur un réglage de position à l'instant de commutation (T1), lors du passage de la première phase (P1) vers le deuxième phase (P2), la vitesse de rotation (n) chutant de façon strictement monotone pendant la commutation,
(C) Positionnement de la broche (6.2) au moyen du dispositif de réglage de position (2), de l'instant de commutation (T1) jusqu'à un instant (Te) auquel est atteinte la position de repos prédéfinie, dans la deuxième phase (P2).

2. Procédé pour l'orientation de broche selon la revendication 1**, caractérisé en ce que** le blocage de l'étape (A) est effectué avec un courant aussi élevé que possible.

3. Procédé pour l'orientation de broche selon la revendication 2, **caractérisé en ce que** le courant le plus élevé possible est prédéterminé par une unité de surveillance (9).

4. Procédé selon la revendication 3, **caractérisé en ce que** l'unité de surveillance (9) surveille la température de l'entraînement de broche (6.1) et/ou l'électronique d'entraînement (5), et limite le courant maximal en cas de risque de surchauffe.

5. Procédé selon l'une des revendications précédentes, **caractérisé en ce que** le blocage de l'étape (A) est effectué en indiquant au dispositif de réglage de vitesse de rotation (4) une vitesse de rotation théorique (n_soll) faible, nettement inférieure à la première vitesse de rotation limite (Ng1), de préférence une vitesse de rotation théorique (n_soll) de zéro, de sorte que l'entraînement de broche est freiné à la limite de courant.

6. Procédé selon l'une des revendications précédentes, **caractérisé en ce que** des valeurs de position théoriques (x_soll) sont indiquées au dispositif de réglage de position (2), dans la deuxième phase (P2), de manière à produire une mise en place limitée en à-coups de la position de repos.

7. Procédé selon la revendication 6, **caractérisé en ce qu'**un à coup maximal est indiqué pour la mise en place limitée en à-coups de la position de repos.

8. Commande numérique pour une machine-outil, conçue pour un procédé selon l'une des revendications précédentes.
